(19) **Europäisches Patentamt / European Patent Office / Office européen des brevets**

(11) **EP 2 624 209 A1**

(12) **EUROPEAN PATENT APPLICATION**

(43) Date of publication:
**07.08.2013 Bulletin 2013/32**

(51) Int Cl.:
**G06T 7/00** (2006.01)

(21) Application number: **12178818.6**

(22) Date of filing: **01.08.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **26.12.2011 JP 2011284022** | (71) Applicant: **Kabushiki Kaisha Toshiba**<br>**Tokyo 105-8001 (JP)**<br><br>(72) Inventor: **Maruyama, Emi**<br>**Tokyo, 105-8001 (JP)**<br><br>(74) Representative: **Henkel, Breuer & Partner**<br>**Patentanwälte**<br>**Maximiliansplatz 21**<br>**80333 München (DE)** |

(54) **Position coordinate detecting device, a position coordinate detecting method, and electronic device**

(57)　According to one embodiment, position coordinate detecting device (23) includes: image acquisition module (231); feature point detector (233); distance calculator (234); actual distance calculator (235); registration module (236); authentication module (237); coordinate detector (238). Feature point detector detects feature points of face captured together with marker, and detects coordinate information of the feature points. Distance calculator calculates distance between the feature points in the image based on the coordinate information.

Actual distance calculator calculates actual distance between the feature points based on the distance between the feature points, reference distance, point on the image corresponding to origin on the marker, and point on the image corresponding to another point on the marker. Registration module registers the actual distance and the coordinate information in database. Authentication module compares coordinate information with the database, and outputs the actual distance between feature points. Coordinate detector detects position coordinates using the actual distance.

**FIG.2**

**Description**

FIELD

Embodiments described herein relate generally to a position coordinate detecting device, a position coordinate detecting method, and an electronic device.

BACKGROUND

Conventionally, when an area in which a viewer can view images stereoscopically is adjusted in an autostereoscopic image display device or when a direction of a speaker relative to a listener is adjusted in an acoustic system, positional information of the viewer or the listener is used.

Conventionally, in order to obtain such positional information of the viewer or the listener, feature points of the face (a face width, a distance between eyes, etc.) of the viewer or the listener on an image captured by a camera are detected so as to calculate a distance between the feature points. Then, based on the distance between the feature points in the captured image and a preliminarily given average distance between feature points, actual position coordinates of the viewer or the listener are calculated using pinhole-camera-model perspective projection.

In the method disclosed in the conventional technique, the preliminarily given average distance between feature points needs to be accurate. For example, an average face width of Japanese can be used as the average distance between feature points.

However, an investigation confirms that there exist individual differences in a range -1.1 cm to 1.8 cm with respect to the average face width even if all individuals are adults (according to AIST Body Dimension/Form Database by Digital Human Research Center of National Institute of Advanced Industrial Science and Technology).

Therefore, the calculation of positional information of the viewer or the listener using a fixed distance between feature points can cause errors when an area in which a viewer can view images stereoscopically is adjusted in an autostereoscopic image display device or when a direction of a speaker relative to a listener is adjusted in an acoustic system.

Furthermore, when a wide range of viewers from children to aged persons is set as a target, the calculation of positional information using a fixed distance between feature points can cause larger errors.

In view of the aspects described above, the invention is aimed at detecting positional coordinates of a person with high accuracy so as to provide a user with an appropriate image or sound.

SUMMARY

According to an embodiment, a position coordinate detecting device (23) comprises: a captured image acquisition module (231); a face feature point detector (233); a distance calculator (234); an actual distance calculator (235); an information registration module (236); a face authentication module (237); and a position coordinate detector (238). The captured image acquisition module (231) is configured to acquire an image captured by a camera (37). The face feature point detector (233) is configured to detect, from the captured image acquired by the captured image acquisition module (231), feature points of a face of a person captured together with a predetermined marker, and to detect coordinate information of each of the feature points. Here, the predetermined marker comprises a pattern of at least one of a predetermined color and size. Further, coordinates of feature points of the pattern are known. The distance calculator (234) is configured to calculate a distance between the feature points of the face based on the coordinate information corresponding to the feature points output from the face feature point detector (233). The actual distance calculator (235) is configured to calculate an actual distance between the feature points of the face based on the distance between the feature points of the face, a reference distance for measuring a distance between the feature points, a point in the captured image corresponding to an origin on the marker, and a point in the captured image corresponding to a point on the marker that is available for obtaining the reference distance. The information registration module (236) is configured to register the actual distance and the coordinate information of each of the feature points of the face in a database as registration information related to the person. The face authentication module (237) is configured to compare, when position information of a person is required, the coordinate information corresponding to the feature points output from the face feature point detector (233) with the database, and to output the actual distance between feature points of the face of a matching person that is contained in the registration information. The position coordinate detector (238) is configured to detect position coordinates of the person using the actual distance between the feature points of the face that is output from the face authentication module (237).

BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary external perspective view of a digital television according to an embodiment;

FIG. 2 is an exemplary block diagram of a signal processing system of the digital television in the embodiment;

FIG. 3 is an exemplary block diagram of a functional configuration of a controller of the digital television in the embodiment;

FIG. 4 is an exemplary front view of a marker in the embodiment;

FIG. 5 is an exemplary front view of a marker in the embodiment;

FIG. 6 is an exemplary front view of a marker in the embodiment;

FIGS. 7A and 7B are exemplary explanatory diagrams illustrating a camera coordinate system and a world coordinate system in the embodiment;

FIG. 8 is an exemplary explanatory diagram illustrating feature points in the marker in the embodiment;

FIG. 9 is an exemplary explanatory diagram illustrating points on a captured image corresponding to the points in the marker in the embodiment;

FIG. 10 is an exemplary explanatory diagram illustrating pinhole-camera-model perspective projection in the embodiment.

FIG. 11 is an exemplary explanatory diagram illustrating definitions of numerical values in the embodiment;

FIG. 12 is an exemplary flowchart illustrating a flow of viewer registration processing in the embodiment;

FIG. 13 is an exemplary front view illustrating a use of the marker in the embodiment;

FIG. 14 is an exemplary flowchart of face width calculation processing in the embodiment;

FIG. 15 is an exemplary flowchart of viewer position coordinate calculation processing in the embodiment; and

FIG. 16 is an exemplary explanatory diagram illustrating a case in which a mirror is used instead of the marker in the embodiment.

DETAILED DESCRIPTION

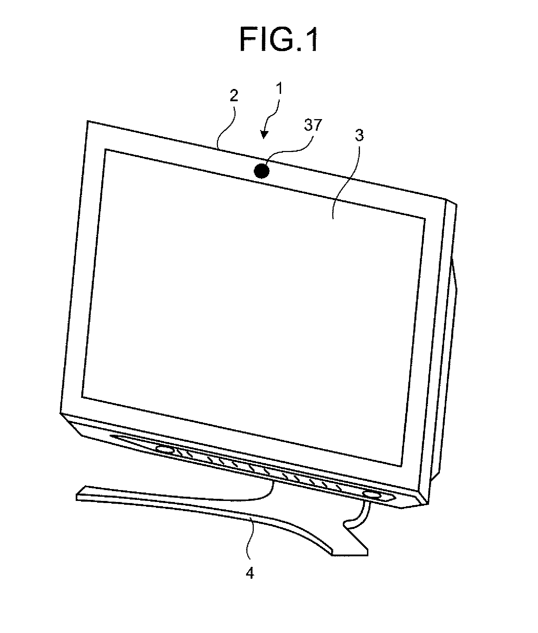

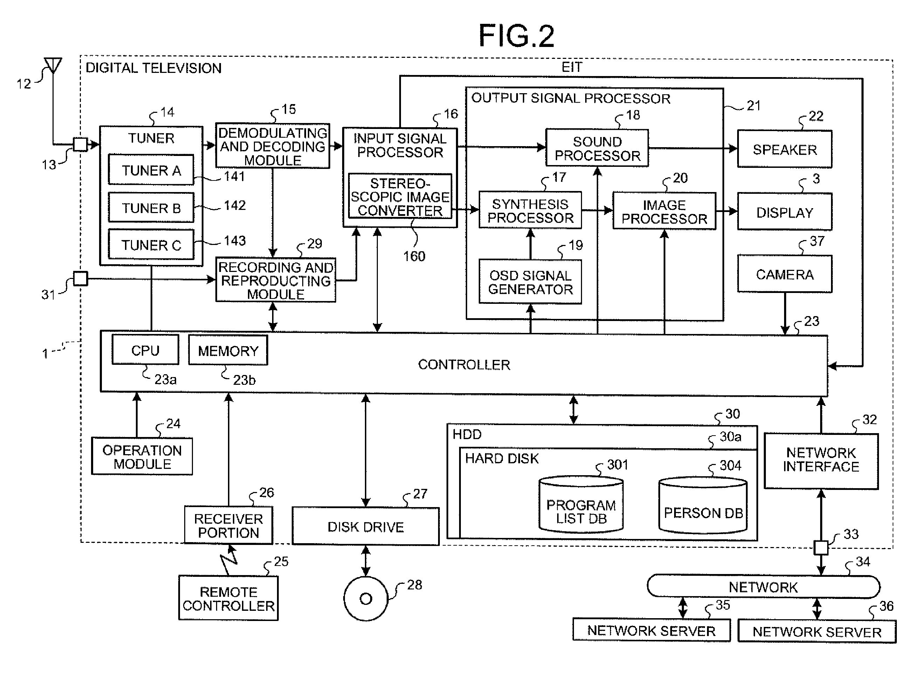

FIG. 1 is an external perspective view of a digital television 1 as an electronic device according to an embodiment. As illustrated in FIG. 1 , the digital television 1 has rectangular appearance in a front view from the front side (a planar view relative to the front surface) . The digital television 1 comprises a housing 2, and a display 3 such as a liquid crystal display (LCD) panel. The display 3 receives an image signal from an image processor 20 (see FIG. 2), that is described later, and displays an image such as a still image or a moving image. The housing 2 is supported by a supporting portion 4.

FIG. 2 is a block diagram illustrating a signal processing system of the digital television 1 in the embodiment. Note that the digital television 1 serves as a stereoscopic image output device, and can display not only images based on normal image signals for planar view (two-dimensional) display but also images based on image signals for stereoscopic view (three-dimensional) display. In addition, the digital television 1 allows autostereoscopic image viewing.

As illustrated in FIG. 2, in the digital television 1, digital television broadcasting signals received by an antenna 12 are provided to a tuner 14 as a receiver through an input terminal 13, so that a broadcasting signal of a desired channel can be selected. In the digital television 1, the broadcasting signal selected at the tuner 14 is provided to a demodulating and decoding module 15 to reproduce a digital image signal and a digital sound signal, etc., and then the reproduced digital signals are output to an input signal processor 16. Note that, for the digital television 1 in the embodiment, a case in which three tuners (tuner A 141 and tuner B 142 for receiving terrestrial digital broadcasting, and tuner C 143 for receiving BS/CS digital broadcasting) are provided as receivers for receiving digital television broadcasting signals is described as an example.

The input signal processor 16 performs predetermined digital signal processing individually on the digital image signal and the digital sound signal that are provided from the demodulating and decoding module 15.

The input signal processor 16 comprises a stereoscopic image converter 160 performing stereoscopic image conversion processing converting image signals (input image) for normal planar view (two-dimensional) display into image signals for stereoscopic view (three-dimensional) display.

The input signal processor 16 separates an event information table (EIT) indicating event information such as a program name, performers, a starting time from the broadcasting signal selected at the tuner 14. The EIT separated by the input signal processor 16 is input to a controller 23 as program data. The EIT contains therein information relating to programs such as broadcast contents including title information, genre information and performer information of the programs, and broadcast date and time, all of which are event information of the programs.

The input signal processor 16 outputs the digital image signal to a synthesis processor 17 and outputs the digital sound signal to a sound processor 18. The synthesis processor 17 superimposes an on screen display (OSD) signal as an image signal for superimposition such as a caption, a graphical user interface (GUI) or an OSD, that is generated by an OSD signal generator 19, on the digital image signal provided from the input signal processor 16, and then outputs the resulting signal. In this case, the synthesis processor 17 superimposes the OSD signal provided from the OSD signal generator 19 as it is on the image signal provided from the input signal processor 16, and then outputs the resulting signal.

In the digital television 1, the digital image signal output from the synthesis processor 17 is provided to the image processor 20. The image processor 20 converts the input digital image signal into an analog image signal in a format that is supported for display by the display 3 serving as an output module. In the digital television 1, the analog image signal output from the image processor 20 is provided to the display 3 for image output.

The sound processor 18 converts the input digital sound signal into an analog sound signal in a format that is supported for sound reproduction by a speaker 22 at the subsequent stage. Then, the analog sound signal output from the sound processor 18 is provided to the speaker 22 for sound reproduction.

As illustrated in FIG. 2, the synthesis processor 17, the sound processor 18, the OSD signal generator 19, and the image processor 20 described above constitute an output signal processor 21.

In addition, as illustrated in FIG. 1, the digital television 1 is provided with a camera 37 as an imager in the vicinity of the display 3 serving as an image output module. The camera 37 is arranged at a position from which a face of a viewer facing the digital television 1 can be captured.

Here, in the digital television 1, the controller 23 controls, in an integrated manner, all operations in the digital television 1 including the above-described various reception operations. The controller 23 comprises a central processing unit (CPU) 23a therein and, in response to operation information from an operation module 24 as an operating device that is set at the body of the digital television 1 or operation information transmitted from a remote controller 25 as an operating device and received by a receiver portion 26, controls each module so that such operation contents are reflected.

The controller 23 comprises a memory 23b therein. The memory 23b mainly comprises a read only memory (ROM) storing therein a control program executed by the CPU 23a, a random access memory (RAM) providing the CPU 23a with a work area, and a nonvolatile memory storing therein a variety of setting information, control information, operation information from the operation module 24 or the remote controller 25, etc.

The controller 23 is connected to a disk drive 27. On the disk drive 27, an optical disk 28 such as a digital versatile disk (DVD) can be attached or detached freely. The disk drive 27 has a function of recoding/reproducing digital data on the optical disk 28 attached thereto.

The controller 23 can control, based on the operation by a viewer to the operation module 24 or the remote controller 25, so that after the digital image signal and sound signal obtained from the demodulating and decoding module 15 are encrypted by a recording and reproducing processor 29 and converted into data in a predetermined record format, the resulting data is provided to the disk drive 27 and recorded on the optical disk 28.

The controller 23 can control, based on the operation by a viewer to the operation module 24 or the remote controller 25, so that after the digital image signal and sound signal are read out from the optical disk 28 by the disk drive 27 and decoded by the recording and reproducing processor 29, the resulting signals are provided to the input signal processor 16 for the above-described subsequent image display and sound reproduction.

The controller 23 is connected to a hard disk drive (HDD) 30. The controller 23 can control, based on the operation by a viewer to the operation module 24 or the remote controller 25, so that after the digital image signal and sound signal obtained from the demodulating and decoding module 15 are encrypted by the recording and reproducing processor 29 and converted into data in a predetermined record format, the resulting data is provided to the HDD 30 and recorded on a hard disk 30a.

The controller 23 can control, based on the operation by a viewer to the operation module 24 or the remote controller 25, so that after the digital image signal and sound signal are read out from the hard disk 30a by the HDD 30 and decoded by the recording and reproducing processor 29, the resulting signals are provided to the input signal processor 16 for the above-described subsequent image display and sound reproduction.

The HDD 30 stores various data in the hard disk 30a and in such a way functions as a program database (program list DB) 301 and a person database (person DB) 304. The program database 301 stores therein the program data that is the EIT separated by the input signal processor 16 under the control of the controller 23. The person database (person DB) 304 stores therein a distance between feature points (e.g., a face width) and coordinates of feature points of a face (e.g., coordinate information of a profile of a face), that are described later, while associating them to each viewer ID.

The digital television 1 is provided with an input terminal 31. The input terminal 31 is used for directly inputting the digital image signal and sound signal from the outside of the digital television 1, and exemplified by a LAN terminal, a USB terminal, a HDMI terminal, etc. Based on the control of the controller 23, the digital image signal and sound signal input through the input terminal 31 are provided to the recording and reproducing processor 29, and then to the input signal processor 16 for the above-described subsequent image display and sound reproduction.

Based on the control of the controller 23, the digital image signal and sound signal input through the input terminal 31 are provided to the recording and reproducing processor 29, and then to the disk drive 27 for the record/ reproduction on the optical disk 28 or to the HDD 30 for the record/reproduction on the hard disk 30a.

The controller 23 also controls, based on the operation by a viewer to the operation module 24 or the remote controller 25, so that, between the disk drive 27 and the HDD 30, the digital image signal and sound signal having been stored in the optical disk 28 are stored in the hard disk 30a, or the digital image signal and sound signal having been stored in the hard disk 30a are stored in the optical disk 28.

The controller 23 is connected to a network interface 32. The network interface 32 is connected to an external network 34 though an input/output terminal 33. The network 34 is connected to network servers 35 and 36 providing various services using a communication function through the network 34. Thus, it is possible that the controller 23 accesses a desired network server 35 or 36 through the network interface 32, the input/output terminal 33 and the network 34 and performs information communication so as to use service provided. Note that the network interface 32 may be one to which an SD memory card or a USB device is connected through the input/output terminal 33.

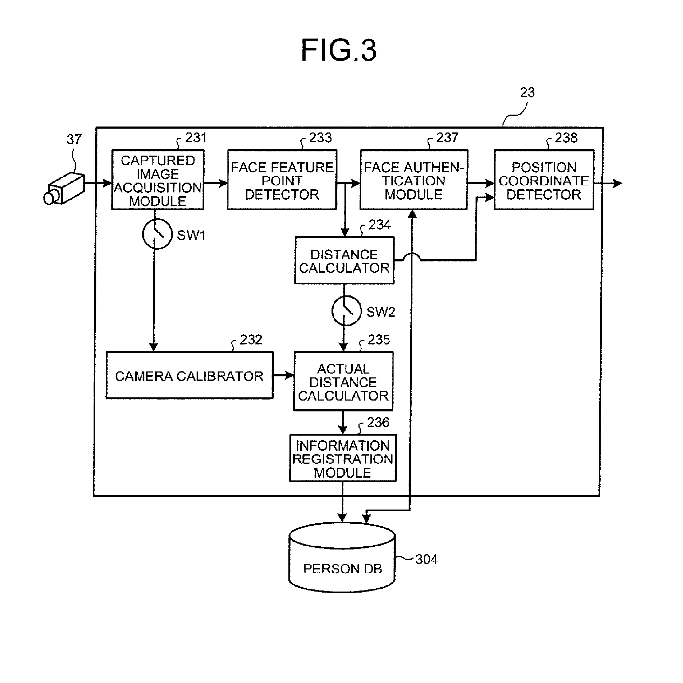

The controller 23 serves as a position coordinate detecting device in a manner such that the CPU 23a operates in accordance with a control program. As illustrated in FIG. 3, the controller 23 comprises a captured image acquisition module 231, a camera calibrator 232, a face feature point detector 233, a distance calculator 234, an actual distance calculator 235, an information registration module 236, a face authentication module 237, and a position coordinate detector 238.

Next, the function of each module is described schematically.

The captured image acquisition module 231 acquires a captured image from an image captured by the camera 37. In the digital television 1, the captured image acquisition module 231 controls so that the image captured by the camera 37 is transmitted to the camera calibrator 232 and the face feature point detector 233.

The camera calibrator 232 performs general camera calibration to derive a transformation matrix for reproducing a point m on a camera coordinate system of the image captured by the camera 37 based on a point M on a world coordinate system.

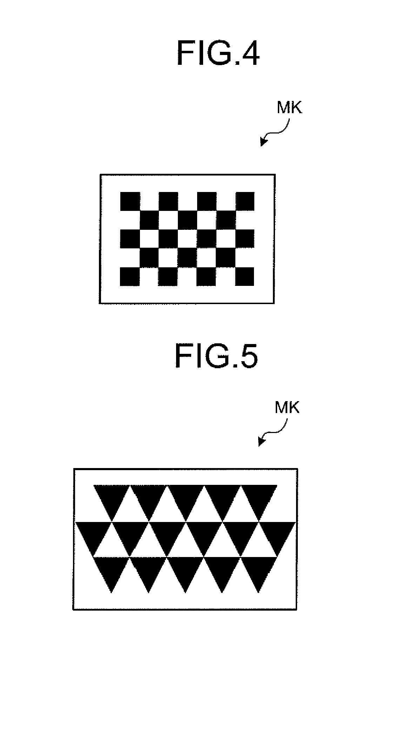

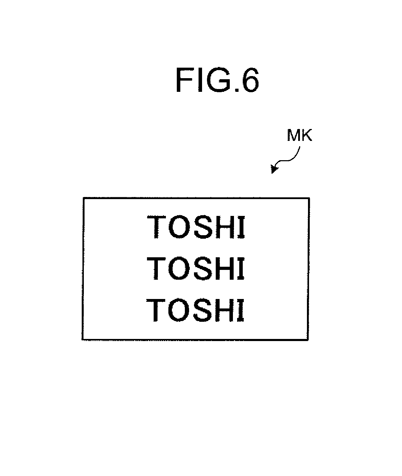

In the embodiment, the camera calibration is performed using a marker MK as illustrated in FIG. 4. The marker MK is a pattern with a predetermined size and color, and is included in the purchase of the digital television 1. The marker MK exemplified in FIG. 4 is a checkerboard. However, the embodiment is not limited thereto, and another pattern (see FIG. 5) or a character string (see FIG. 6) may be applied as a marker MK.

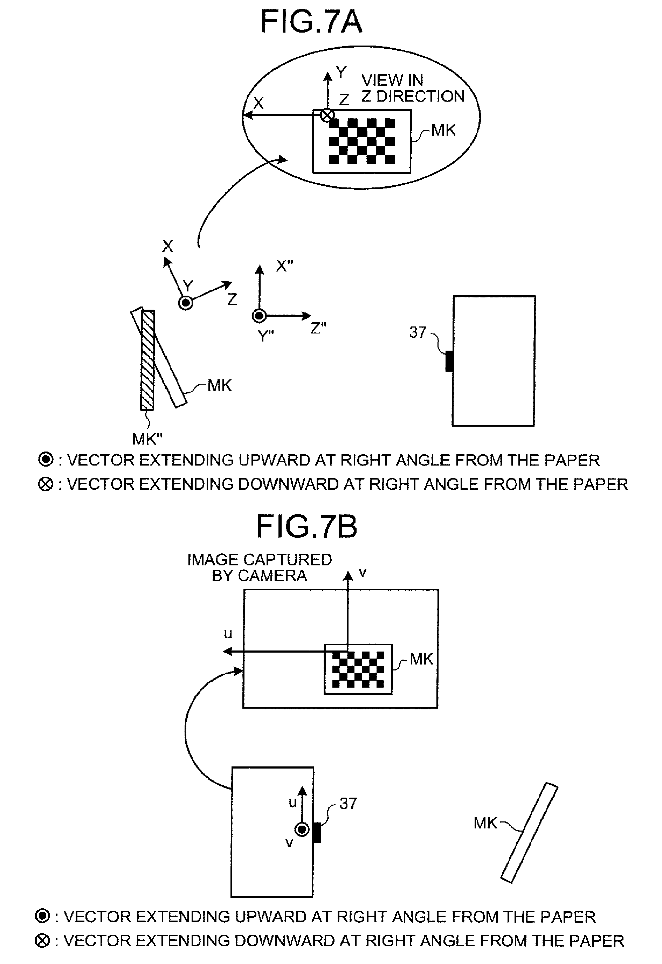

FIGS. 7A and 7B are explanatory diagrams illustrating a camera coordinate system and a world coordinate system in the embodiment. As illustrated in FIG. 7A, in the world coordinate system, a position of a person or an object is specified with a coordinate system in three-dimensional space (indicated by X-Y-Z coordinates in FIG. 7A). An origin of the X-Y-Z coordinates is a predetermined point in the marker MK, and the X-Y plane thereof is a marker face. Meanwhile, as illustrated in FIG. 7B, in the camera coordinate system, a position of a point on a captured image is specified on a captured image plane (u-v plane) obtained when the camera 37 captures an image of an object in three-dimensional space. The point M in the world coordinate system is converted into the point m in the camera coordinate system according to the following formula (1).

$$sm = A[R \mid t]M \tag{1}$$

$$m = \begin{bmatrix} u \\ v \\ 1 \end{bmatrix} \quad \begin{aligned} &m : \text{arbitrary point in camera coordinate system} \\ &\text{u} : \text{x - coordinate in captured image [pixel]} \\ &\text{v} : \text{y - coordinate in captured image [pixel]} \end{aligned}$$

$$A = \begin{bmatrix} \alpha & \gamma & u_0 \\ 0 & \beta & v_0 \\ 0 & 0 & 1 \end{bmatrix}$$

$A$ : internal parameter

$(u_0, v_0)$ : origin in captured image [pixel]

$\alpha$ : scaling value of u - coordinate components

$\beta$ : scaling value of v - coordinate components

$\gamma$ : strain coefficient between u - v

$$M = \begin{bmatrix} X \\ Y \\ Z \\ 1 \end{bmatrix}$$

$M$ : arbitrary point in world coordinate system

$X$ : x coordinate [mm]

$Y$ : y coordinate [mm]

$Z$ : z coordinate [mm]

$[R|t]$: external parameter

$s$: multiplication value

For estimating an internal parameter and an external parameter, various methods have been considered. For example, Cited Document 1 [Zhengyou Zhang, "A Flexible New Technique for Camera Calibration", Technical Report MSR-TR-98-71, Microsoft Research, 1998.] proposes a method for estimating an internal parameter and an external parameter based on a known point in the marker MK and a point on a captured image using maximum likelihood estimation. In the open source computer vision library called openCV [http://www.intel.com/technology/computing/opencv/index.htm], a library for estimating an internal parameter and an external parameter according to the method of Cited Document 1 is provided. Note that the method for estimating an internal parameter and an external parameter is not limited to the above-described ones, and other methods may be applied to estimate an internal parameter and an external parameter.

Here, when the formula:

$$M' = [\ R\ |\ t\ ]\ M$$

is assumed, the following formula (2) is derived.

$$M' = RM + t \qquad\qquad (2)$$

$R$ : rotating matrix (3 × 3 square matrix) of x axis, y axis, and z axis

$$t = \begin{bmatrix} x_0 \\ y_0 \\ z_0 \end{bmatrix}$$

$x_0, y_0, z_0$: relative distance between center of camera and origin of marker [mm]

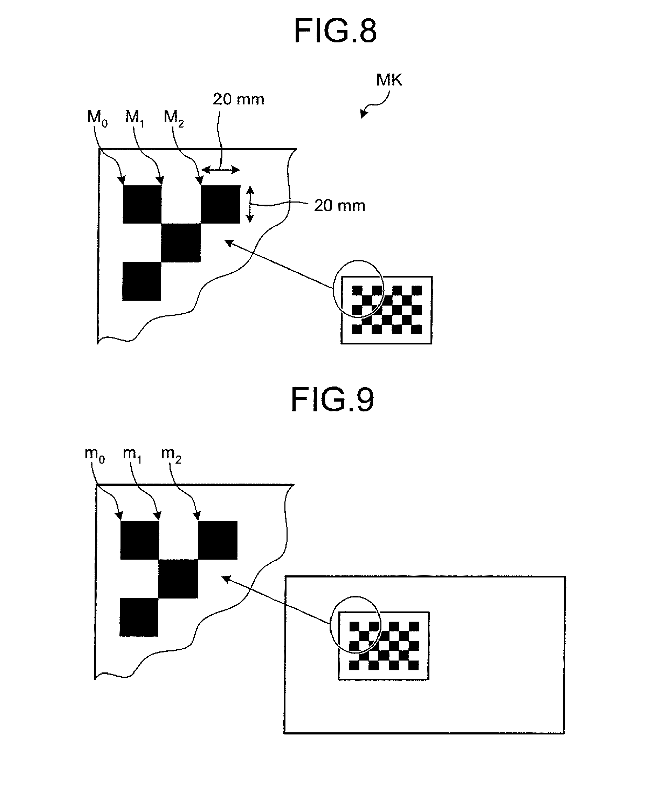

The description is given concretely as follows. Edges of the marker MK are used as feature points. The coordinates of each feature point marked on the marker MK in the world coordinate system are already known, if the origin is determined. Each feature point can be detected easily from a captured image. When the marker MK is a checkerboard with white/black squares each of which has a size of 20 mm × 20 mm as illustrated in FIG. 8, with the origin $M_0$=(0, 0, 0), $M_1$=(20, 0, 0) and $M_2$=(40, 0, 0)[unit: mm] are given. The points $m_0$, $m_1$, $m_2$ in the captured image that correspond to the points in the marker MK are arranged as illustrated in FIG. 9.

The values of the coordinates of the points $M_0$, $M_1$, $M_2$, $M_3$, ......, Mn in the marker MK are input in M in the formula (1), and the values of the coordinates of the points $m_0$, $m_1$, $m_2$, ....., $m_{n+1}$ in the captured image that correspond to Ms are input in m in the formula (1) so as to obtain an external parameter [R|t] and a rotating matrix (3x3 square matrix) R.

Based on the rotating matrix ($3\times3$ square matrix) R thus obtained, a rotation correction value M" of a distance between two points in the marker MK" is obtained using the following formula (3).

$$M" = RM \tag{3}$$

The coordinate axes X"-Y"-Z" defining a position of the point M" are illustrated in FIG. 7A. The X"-Y" plane is parallel to the image face captured by the camera: u-v face illustrated in FIG. 7B. The point $M_k$ ($X_k$, 0, 0) in the marker MK is input in the formula (3) so as to obain the corresponding point $M"_k$ ($X"_k$, $Y"_k$, $Z"_k$). The point $M"_k$ ($X"_k$, $Y"_k$, $Z"_k$) thus calculated using the formula (3) is arranged on a virtual marker MK" with rotation correction applied. Then, the distance $X"_k$ between the origin $M"_0$ (0, 0, 0) and the point $M"_k$ in an X" direction in the marker MK" is considered as a reference distance for face width measurement.

The camera calibrator 232 outputs the distance $X"_k$ in the marker MK" as the reference distance for face width measurement to the actual distance calculator 235.

The face feature point detector 233 detects feature points of a face (e.g., the center of iris of an eye, an inner canthus, an eyebrow, a profile of a face, a nose) from the image captured by the camera 37, and calculates the coordinates of each feature point. The description of the method for detecting feature points of a face (e.g., the center of iris of an eye, an inner canthus, an eyebrow, a profile of a face, a nose) is omitted here because various methods are already known. The face feature point detector 233 outputs the coordinate information corresponding to the feature points to the distance calculator 234. In the embodiment, the face feature point detector 233 outputs the coordinate information of a profile of a face, for example, to the distance calculator 234 or the face authentication module 237.

The distance calculator 234 calculates a face width w [pixel] based on the coordinate information corresponding to the feature points (coordinate information of the profile of a face) that is output from the face feature point detector 233. It is obvious that, depending on algorithm for position coordinate detection, a method for calculating a distance between both eyes or between a nose and an eye, for example, may be used alternatively. The distance calculator 234 outputs the face width w [ pixel] to the actual distance calculator 235.

The actual distance calculator 235 calculates an actual face width W of the user based on the distance $X"_k$ in the marker MK" as a reference distance for face width measurement, the point $m_0$ ($u_0$, $V_0$)[pixel] in the captured image that corresponds to the origin $M_0$ in the marker MK, the point $m_k$ ($u_k$, $V_k$)[pixel] in the captured image that corresponds to the $M_k$ in the marker MK, and the face width w [pixel]. The actual distance calculator 235 calculates the actual face width W of the user using pinhole-camera-model perspective projection with the following formula (4) (note that depending on algorithm for position coordinate detection, a method for calculating a distance between both eyes or between a nose and an eye, for example, may be used alternatively).

$$W = x"_k \times w \ / \ abs(u_0 - u_k) \tag{4}$$

*abs( ) : absolute value calculation*

The information registration module 236 registers, in the person database 304, the face width W of the user and the coordinate information of each feature point of the user as registration information related to the user.

The face authentication module 237 compares the coordinate information corresponding to the feature points (coordinate information of the profile of a face) that is output from the face feature point detector 233 with the person database 304, and determines whether the face in the captured image matches registration information in the person database 304. When a personal ID with matching coordinate information of each feature point is detected among registration information, the face authentication module 237 outputs the face width W of the matching person that is contained in registration information in association with the personal ID of the person to the position coordinate detector 238.

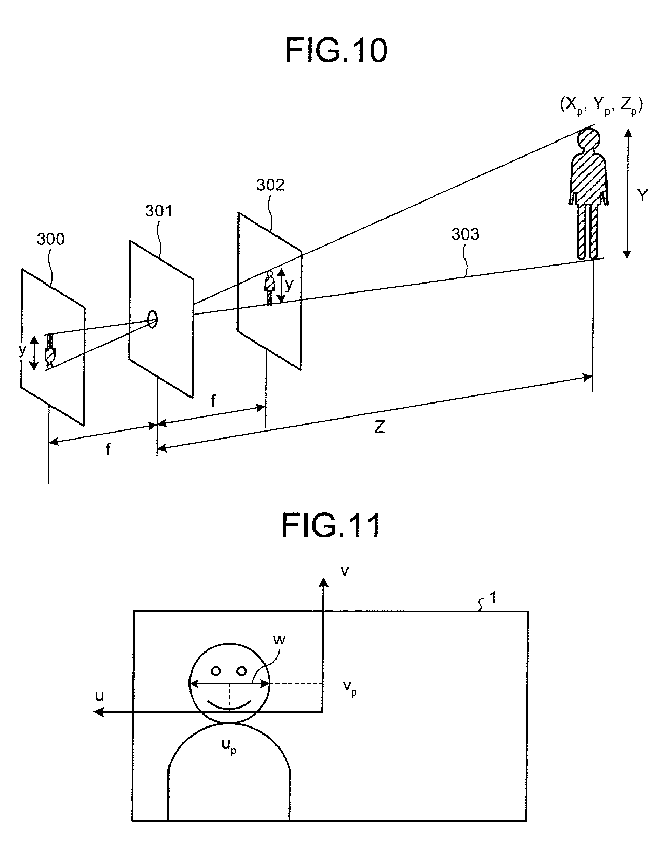

The position coordinate detector 238 detects the actual position coordinates of the viewer by pinhole-camera-model perspective projection using the face width W output from the face authentication module 237. The pinhole camera model is a model in which the relationship between three-dimensional position coordinates and a captured image is represented ideally. With an original captured image 300, a pinhole (optical center) 305, an equivalent captured image plane 302 and an optical axis 303, as illustrated in FIG. 10, when it is known that the height of the person is Y [mm], position coordinates ($X_p$, $Y_p$, $Z_p$)[mm] are calculated with the following formula in which the distance Z is obtained using y as a height of the person in the captured image and a focal length f.

$$Z=(f \times Y)/y \ [\text{mm}]$$

In the example illustrated in FIG. 10, the distance Z is calculated based on the known height Y. Similarly, as illustrated in FIG. 11, based on a gravity center of a face ($u_p$, $v_p$)[pixel] in the captured image, the face width w [pixel], the focal length f [pixel] of a camera lens of the camera 37, and the face width W [mm] output from the face authentication module 237, the position coordinates ($X_p$, $Y_p$, $Z_p$)[mm] of the viewer can be calculated using the following formulas. In FIG. 11, with a center of the captured image as an origin, a shorter direction is defined by a v axis and a longer direction is defined by a u axis.

$$X_p=(u_p \times W)/w \ [\text{mm}]$$

$$Y_p=(v_p \times W)/w \ [\text{mm}]$$

$$Z_p=(f \times W)/w \ [\text{mm}]$$

In the embodiment, the face width W [mm] output from the face authentication module 237 is accurate. Therefore, the actual position coordinates of the viewer can be calculated accurately. Note that depending on algorithm for position coordinate detection, a method for calculating a distance between both eyes or between a nose and an eye, for example, may be used alternatively, although the above description is based on the assumption that the face width is registered.

If the face authentication module 237 fails to detect matching personal data (face data) as registration information, the position coordinate detector 238 uses a preliminarily given average face width ave_w to obtain the position coordinates of the viewer with the following formulas:

$$X_p=(u_p \times ave\_w)/w \ [\text{mm}]$$

$$Y_p=(v_p \times ave\_w)/w \ [\text{mm}]$$

$$Z_p=(f \times ave\_w)/w \ [\text{mm}]$$

Next, the steps of viewer registration processing by the digital television 1 in a manner that the CPU 23a of the controller 23 operates in accordance with a control program are described.

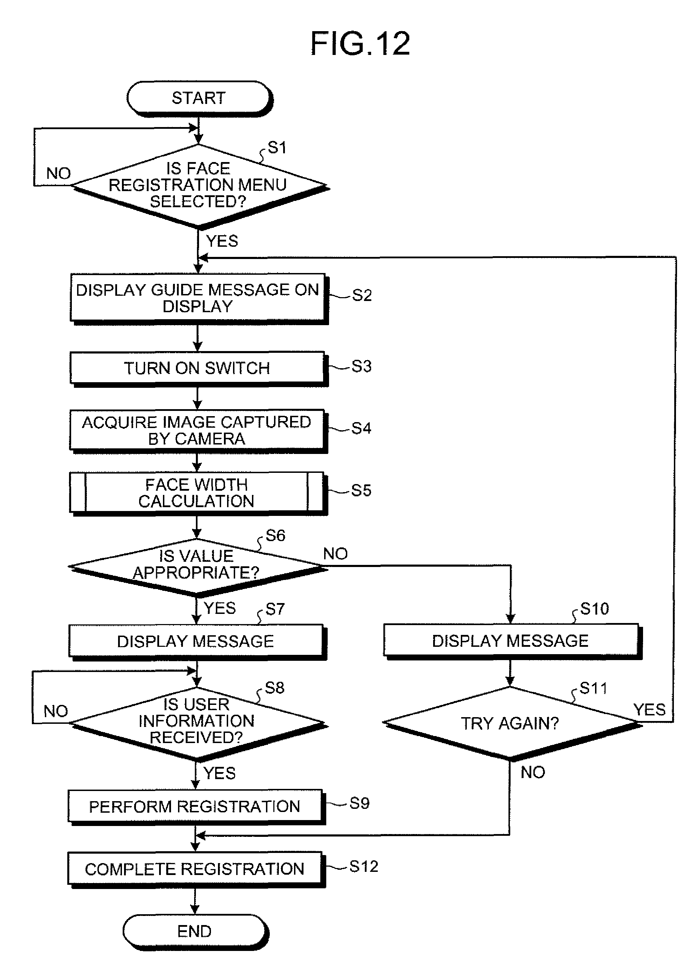

FIG. 12 is a flowchart illustrating a flow of viewer registration processing in the embodiment. As illustrated in FIG. 12, when a face registration menu is selected among setting menus through the operation by one viewer to the remote controller 25, and the corresponding remote-control input signal is input through the receiver portion 26 (Yes at S1), the controller 23 outputs an appropriate display image or a guide message to the display 3 (S2). The guide message conveys written notes for appropriately capturing images. For example, it is intended so that the viewer stands at a position that can be clearly viewed from the camera 37, so that the viewer holds an equipped marker MK in a predetermined direction, or so that the viewer stands still for a while. Note that the contents of such notes vary depending on a design of the marker MK, a method of capturing images by the camera 37, etc.

In addition, the controller 23 generates a turn ON signal (signal flowing through SW1 and SW2 in FIG. 3) so that a circuit necessary for face registration is turned ON (S3).

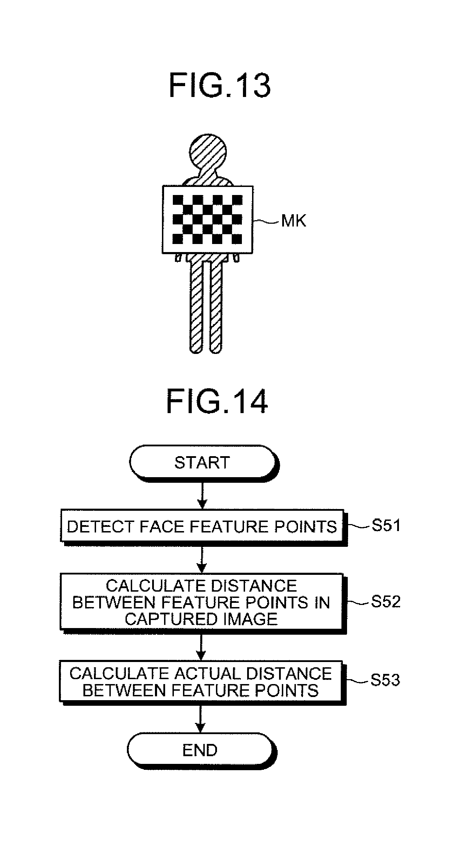

In this state, the viewer holds the marker MK in the manner as illustrated in FIG. 13, and maintains the posture in accordance with the appropriate display image or the guide message.

Next, the controller 23 (the captured image acquisition module 231) acquires a captured image based on an image captured by the camera 37 (S4).

Thereafter, the controller 23 calculates a distance between feature points (e.g., a face width) based on the captured image obtained by the captured image acquisition module 231 after the input by the camera 37 (S5). Here, FIG. 14 is a flowchart illustrating a flow of face width calculation processing in the embodiment. As illustrated in FIG. 14, the face feature point detector 233 detects feature points of a face (e.g., the center of iris of an eye, an inner canthus, an eyebrow, a profile of a face, a nose) from the image captured by the camera 37 and calculates the coordinates of each feature point (S51). Then, the distance calculator 234 calculates a distance between feature points of the face (e.g. , a face width) in the captured image based on the coordinate information corresponding to the feature points that is output from the face feature point detector 233 (S52).

Next, the actual distance calculator 235 calculates an actual distance between feature points (e.g., a face width) using a reference distance obtained preliminarily with camera calibration by the camera calibrator 232 (S53).

Once the distance between feature points (e.g., a face width) is calculated in the above-described manner, the controller 23, returning to FIG. 12, determines whether the distance between feature points (e.g., a face width) calculated at S5 is appropriate (S6).

When the distance between feature points (e.g., a face width) calculated at S5 is appropriate (Yes at S6), the controller 23 displays a message "Completed" on the display 3 (S7).

Next, when it is determined that user information such as an ID (nickname, etc.) or viewing preference of the viewer is input though the operation module 24 or the remote controller 25 (Yes at S8), the controller 23 registers, for each of registered viewer IDs, the distance between feature points (e.g., a face width) and the face feature point coordinates from the face feature point detector 233 in the person database (person DB) 304 (S9), and finishes viewer registration processing (S12).

At S12, the controller 23 generates a turn OFF signal (signal flowing through SW1 and SW2 in FIG. 3) so that a circuit necessary for face registration is turned OFF.

By contrast, when the distance between feature points (e.g., a face width) calculated at S5 is inappropriate (No at S6), the controller 23 displays a message "Failed" on the display 3 (S7). At the same time, the controller 23 displays check points for appropriate capturing images, and displays buttons with which the viewer can select using the remote controller 25 whether to capture an image again (310).

When the controller 23 determines that the button for capturing an image again is selected through the remote controller 25 (Yes at S11), the process returns to S2.

By contrast, when the controller 23 determines that the button for not capturing an image again is selected through the remote controller 25 (No at S11), the process proceeds to S12 to finish face width calculation processing in viewer registration.

Next, the steps of viewer position coordinate calculation processing by the digital television 1 in a manner that the CPU 23a of the controller 23 operates in accordance with a control program are described. The viewer position coordinate calculation processing is required for adjusting an area in which a viewer can view images stereoscopically provided by the digital television 1 allowing autostereoscopic image viewing.

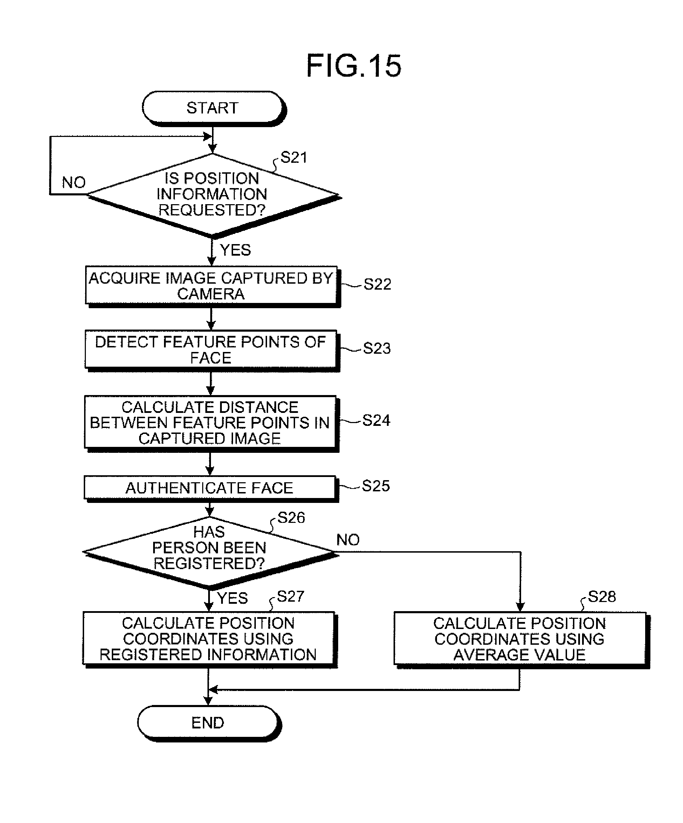

FIG. 15 is a flowchart illustrating a flow of viewer position coordinate calculation processing in the embodiment. As illustrated in FIG. 15, when a request for viewer position coordinate is selected through the operation to the remote controller 25 in adjusting an area in which the viewer can view images stereoscopically provided by the digital television 1, and the corresponding remote-control input signal is input through the receiver portion 26 (Yes at S21), the controller 23 (the captured image acquisition module 231) acquires a captured image based on an image captured by the camera 37 (S22) . Note that the request for viewer position coordinate may be performed through periodic timer operation.

Next, the controller 23 (the face feature point detector 233) detects feature points of a face (e.g., the center of iris of an eye, an inner canthus, an eyebrow, a profile of a face, a nose) from the image captured by the camera 37 and calculates the coordinates of each feature point (S23) . Then, the controller 23 (the distance calculator 234) calculates a distance between feature points of the face (e.g., a face width) in the captured image based on the coordinate information corresponding to the feature points that is output from the face feature point detector 233 (S24).

Next, the controller 23 (the face authentication module 237) compares the coordinate information corresponding to the feature points (coordinate information of a profile of a face) that is output from the face feature point detector 233 with the person database 304, and determines whether the face in the captured image matches registration information in the person database 304 (S25).

When a personal ID with matching coordinate information of each feature point is detected among registration information (Yes at S26), the controller 23 (the face authentication module 237) outputs the distance between feature points (e.g., a face width) of the matching person, that is contained in registration information in association with the personal ID of the person, to the position coordinate detector 238. Then, the controller 23 (the position coordinate detector 238) calculates position coordinates using the registration information (a distance between feature points (e.g., a face width)) (S27).

By contrast, if the controller 23 (the face authentication module 237) fails to detect matching personal data (face data) as registration information (No at S26), the controller 23 (the position coordinate detector 238) uses a preliminarily given average distance between feature points (e.g., a face width) to calculate position coordinates (S28).

The viewer position coordinates thus calculated is output to the stereoscopic image converter 160 serving as an adjustment processing device of the input signal processor 16 for adjustment of an area in which the viewer can view images stereoscopically provided by the digital television 1 allowing autostereoscopic image viewing.

As described above, in the embodiment, an actual distance between feature points of a face is calculated using a predetermined marker, and registered together with coordinate information of the feature points of the face. Here, the predetermined marker comprises a pattern of a predetermined color, size, etc, and the coordinates of feature points of the pattern are known in a frame of reference of the pattern. Then, when the position coordinate of a person is needed, coordinate information of feature points of a face of the person is compared with a database so that the position coordinates of the person is detected using an actual distance between feature points of the matching person. It is thus possible to detect the position coordinates of a person with higher accuracy as compared with a case in which the position coordinates are calculated using an average distance of feature points of a face. Accordingly, it is possible to recognize a position of a user with high accuracy and thus provide the user with appropriate images and sound.

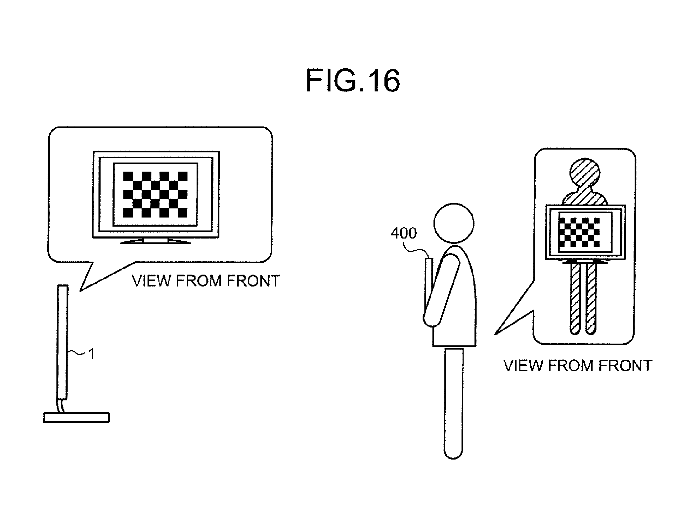

In the embodiment, the camera calibration or the viewer registration processing is performed using the marker MK. However, the embodiment is not limited thereto. For example, in camera calibration or viewer registration processing, an alternative to a method in which a user stands with holing the marker MK may be such that an image substituting for the marker MK is displayed on the display 3 of the digital television 1 and a user stands with holding a mirror 400, as illustrated in FIG. 16.

When an object that is generally available is used as a marker, there may be provided means, after the marker is captured, for allowing the input of the feature quantity thereof (vertical and horizontal size, etc.) through a menu, or for estimating the feature quantity thereof based on the image captured with a predetermined distance from the camera 37.

Furthermore, with respect to a guide message displayed at S2 of viewer registration processing, for example, there may be a guide for displaying an image captured by the camera 37 on the display 3 so that a user can confirm whether he/she is at a correct position.

In the embodiment, the digital television 1 is applied as an electronic device. However, the invention is not limited thereto, and an acoustic system may be applied, for example.

The control program executed in the digital television 1 in the embodiment may be recorded, as a file whose format is installable or executable, in a computer readable recording medium such as a compact disc read only memory (CD-ROM), a flexible disk (FD), a CD recordable (CD-R), a digital versatile disk (DVD), and then provided.

The control program executed in the digital television 1 in the embodiment may be stored in a computer connected to a network such as the Internet, and then provided through download thereof through the network. Alternatively, the control program executed in the digital television 1 in the embodiment may be provided or distributed through a network such as the Internet.

The control program executed in the digital television 1 in the embodiment is of module configuration comprising the modules (the captured image acquisition module 231, the camera calibrator 232, the face feature point detector 233, the distance calculator 234, the actual distance calculator 235, the information registration module 236, the face authentication module 237, and the position coordinate detector 238) described above. As actual hardware, the CPU (processor) reads out the control program from the ROM and executes it, so that each module mentioned above is loaded to a main memory and the captured image acquisition module 231, the camera calibrator 232, the face feature point detector 233, the distance calculator 234, the actual distance calculator 235, the information registration module 236, the face authentication module 237, and the position coordinate detector 238 are generated in the main memory.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1.  A position coordinate detecting device (23) comprising:

    a captured image acquisition module (231) configured to acquire an image captured by a camera (37);
    a face feature point detector (233) configured to detect, from the captured image acquired by the captured image acquisition module (231), feature points of a face of a person captured together with a predetermined marker, and to detect coordinate information of each of the feature points, the predetermined marker comprising a pattern of at least one of a predetermined color and size, coordinates of feature points of the pattern being known;

a distance calculator (234) configured to calculate a distance between the feature points of the face based on the coordinate information corresponding to the feature points output from the face feature point detector (233);

an actual distance calculator (235) configured to calculate an actual distance between the feature points of the face based on the distance between the feature points of the face, a reference distance for measuring a distance between the feature points, a point in the captured image corresponding to an origin on the marker, and a point in the captured image corresponding to a point on the marker that is available for obtaining the reference distance;

an information registration module (236) configured to register the actual distance and the coordinate information of each of the feature points of the face in a database as registration information related to the person;

a face authentication module (237) configured to compare, when position information of a person is required, the coordinate information corresponding to the feature points output from the face feature point detector (233) with the database, and to output the actual distance between feature points of the face of a matching person that is contained in the registration information; and

a position coordinate detector (238) configured to detect position coordinates of the person using the actual distance between the feature points of the face that is output from the face authentication module (237).

2. The position coordinate detecting device (23) of Claim 1, further comprising a calibration module (232) configured to calculate, from the captured image acquired by the captured image acquisition module (231), the reference distance for measuring the distance between the feature points of the face based on the known points of the marker and points on the captured image.

3. The position coordinate detecting device (23) of Claim 1, wherein the position coordinate detector (238) is configured to detect the position coordinates of the person by pinhole-camera-model perspective projection.

4. The position coordinate detecting device (23) of Claim 1, wherein the position coordinate detector (238) is configured to detect the position coordinates of the person using a preliminarily given distance between feature points of a face if the face authentication module (237) fails to detect a matching person as registration information.

5. A position coordinate detecting method comprising:

acquiring an image captured by a camera (37);

detecting, from the acquired captured image, feature points of a face of a person captured together with a predetermined marker, and detecting coordinate information of each of the feature points, the predetermined marker comprising a pattern of at least one of a predetermined color and size, coordinates of feature points of the pattern being known in a coordinate frame of the pattern;

calculating a distance between the feature points of the face in the captured image based on the output coordinate information corresponding to the feature points;

calculating an actual distance between the feature points of the face based on the distance between the feature points of the face, a reference distance for measuring a distance between the feature points, a point in the captured image corresponding to an origin on the marker, and a point in the captured image corresponding to a point on the marker that is available for obtaining the reference distance;

registering the actual distance and the coordinate information of each of the feature points of the face in a database as registration information related to the person;

comparing, when position information of a person is required, the output coordinate information corresponding to the feature points with the database and outputting the actual distance between feature points of the face of a matching person that is contained in the registration information; and

detecting position coordinates of the person using the output actual distance between the feature points of the face.

6. The position coordinate detecting method of Claim 5, further comprising calculating, from the acquired captured image, the reference distance for measuring the distance between the feature points of the face based on the known points of the marker and points on the captured image.

7. An electronic device (1), comprising:

a camera (37)

the position coordinate detecting device (23) of any one of Claims 1 to 4 configured to detect position coordinates of a person from an image captured by the camera (37); and

an adjustment processing device (160) configured to perform adjustment processing using the position coordinates of the person that are detected by the position coordinate detecting device (23).

# FIG.1

# FIG.2

DIGITAL TELEVISION

EIT

OUTPUT SIGNAL PROCESSOR

TUNER 14
- TUNER A — 141
- TUNER B — 142
- TUNER C — 143

DEMODULATING AND DECODING MODULE 15

INPUT SIGNAL PROCESSOR 16

STEREO-SCOPIC IMAGE CONVERTER 160

SOUND PROCESSOR 18

SPEAKER 22

SYNTHESIS PROCESSOR 17

IMAGE PROCESSOR 20

DISPLAY 3

OSD SIGNAL GENERATOR 19

CAMERA 37

RECORDING AND REPRODUCTING MODULE 29

21

CONTROLLER 23

CPU 23a

MEMORY 23b

1

OPERATION MODULE 24

RECEIVER PORTION 26

DISK DRIVE 27

HDD 30

HARD DISK 30a

PROGRAM LIST DB 301

PERSON DB 304

NETWORK INTERFACE 32

REMOTE CONTROLLER 25

28

33

NETWORK 34

NETWORK SERVER 35

NETWORK SERVER 36

12

13

31

EP 2 624 209 A1

# FIG.3

## FIG.4

MK

## FIG.5

MK

FIG.6

MK

TOSHI
TOSHI
TOSHI

# FIG.7A

⦿ : VECTOR EXTENDING UPWARD AT RIGHT ANGLE FROM THE PAPER
⊗ : VECTOR EXTENDING DOWNWARD AT RIGHT ANGLE FROM THE PAPER

# FIG.7B

⦿ : VECTOR EXTENDING UPWARD AT RIGHT ANGLE FROM THE PAPER
⊗ : VECTOR EXTENDING DOWNWARD AT RIGHT ANGLE FROM THE PAPER

# FIG.8

MK

M_0 M_1 M_2    20 mm

20 mm

# FIG.9

m_0   m_1   m_2

# FIG.10

# FIG.11

# FIG.12

START

S1 — IS FACE REGISTRATION MENU SELECTED?

NO

YES

DISPLAY GUIDE MESSAGE ON DISPLAY — S2

TURN ON SWITCH — S3

ACQUIRE IMAGE CAPTURED BY CAMERA — S4

FACE WIDTH CALCULATION — S5

S6 — IS VALUE APPROPRIATE?

NO

YES

DISPLAY MESSAGE — S7

DISPLAY MESSAGE — S10

S8 — IS USER INFORMATION RECEIVED?

NO

YES

TRY AGAIN? — S11

YES

NO

PERFORM REGISTRATION — S9

COMPLETE REGISTRATION — S12

END

# FIG.13

MK

# FIG.14

START

DETECT FACE FEATURE POINTS — S51

CALCULATE DISTANCE
BETWEEN FEATURE POINTS IN
CAPTURED IMAGE — S52

CALCULATE ACTUAL DISTANCE
BETWEEN FEATURE POINTS — S53

END

# FIG.15

```
              START
                │
        ┌───────▼────────┐
   NO   │   IS POSITION  │  ╮S21
  ◄─────┤   INFORMATION  │
        │   REQUESTED?   │
        └───────┬────────┘
              YES
                │
   ┌────────────▼────────────┐
   │ ACQUIRE IMAGE CAPTURED BY│  S22
   │          CAMERA          │
   └────────────┬────────────┘
                │
   ┌────────────▼────────────┐
   │  DETECT FEATURE POINTS OF│  S23
   │            FACE          │
   └────────────┬────────────┘
                │
   ┌────────────▼────────────┐
   │   CALCULATE DISTANCE     │  S24
   │ BETWEEN FEATURE POINTS IN│
   │      CAPTURED IMAGE      │
   └────────────┬────────────┘
                │
   ┌────────────▼────────────┐
   │     AUTHENTICATE FACE    │  S25
   └────────────┬────────────┘
                │
        ┌───────▼────────┐  S26
        │      HAS       │            NO
        │  PERSON BEEN   ├────────────────────┐
        │  REGISTERED?   │                    │
        └───────┬────────┘                    │
              YES  S27                         │  S28
   ┌────────────▼────────────┐   ┌────────────▼────────────┐
   │   CALCULATE POSITION     │   │   CALCULATE POSITION     │
   │   COORDINATES USING      │   │   COORDINATES USING      │
   │  REGISTERED INFORMATION  │   │      AVERAGE VALUE       │
   └────────────┬────────────┘   └────────────┬────────────┘
                │◄─────────────────────────────┘
              END
```

# FIG.16

VIEW FROM FRONT

~1

400

VIEW FROM FRONT

Europäisches
Patentamt

European
Patent Office

Office européen
des brevets

**EUROPEAN SEARCH REPORT**

Application Number

EP 12 17 8818

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/102939 A1 (FUJIMOTO JUN [JP]) 1 May 2008 (2008-05-01) * abstract * * paragraphs [0006], [0010], [0012], [0054], [0056], [0059], [0080], [0089] * | 1-7 | INV. G06T7/00 |
| A | JP 2007 241402 A (SHARP KK) 20 September 2007 (2007-09-20) * the whole document * | 1-7 | |
| A | EP 1 594 085 A1 (NEC CORP [JP]) 9 November 2005 (2005-11-09) * abstract * * paragraphs [0002] - [0005], [0012], [0024], [0025], [0030], [0094], [0165], [0169] - [0171] * | 1-7 | |
| A | WO 2006/034135 A2 (PROXIMEX [US]; CHENG KEN PRAYOON [US]; CHANG EDWARD Y [US]; WANG YUAN) 30 March 2006 (2006-03-30) * abstract * * paragraphs [0008] - [0018], [0042] - [0044], [0066] * | 1-7 | |

TECHNICAL FIELDS
SEARCHED      (IPC)

G06T

The present search report has been drawn up for all claims

| Place of search | Date of completion of the search | Examiner |
|---|---|---|
| Munich | 26 June 2013 | Casteller, Maurizio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 17 8818

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2013

| Patent document cited in search report | | Publication date | Patent family member(s) | | Publication date |
|---|---|---|---|---|---|
| US 2008102939 | A1 | 01-05-2008 | AU 2007216726 A1<br>JP 5140257 B2<br>JP 2008067788 A<br>US 2008102939 A1<br>ZA 200707762 A | | 03-04-2008<br>06-02-2013<br>27-03-2008<br>01-05-2008<br>25-09-2008 |
| JP 2007241402 | A | 20-09-2007 | NONE | | |
| EP 1594085 | A1 | 09-11-2005 | CN 1748227 A<br>CN 101064004 A<br>CN 101064005 A<br>EP 1594085 A1<br>HK 1089273 A1<br>JP 4465719 B2<br>KR 20050096187 A<br>US 2006093183 A1<br>WO 2004072899 A1 | | 15-03-2006<br>31-10-2007<br>31-10-2007<br>09-11-2005<br>20-05-2010<br>19-05-2010<br>05-10-2005<br>04-05-2006<br>26-08-2004 |
| WO 2006034135 | A2 | 30-03-2006 | US 2006093190 A1<br>US 2011228094 A1<br>US 2013141559 A1<br>WO 2006034135 A2 | | 04-05-2006<br>22-09-2011<br>06-06-2013<br>30-03-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHENGYOU ZHANG.** A Flexible New Technique for Camera Calibration. *Technical Report MSR-TR-98-71, Microsoft Research,* 1998